# EUROPEAN PATENT SPECIFICATION

(11) **EP 2 297 282 B1**
(45) Date of publication and mention of the grant of the patent: **05.12.2018**
(21) Application number: 09765974.2
(22) Date of filing: 18.06.2009
(51) Int. Cl.: C10L 1/02, C11C 3/00

(54) **METHOD FOR PRODUCING MOTOR FUEL**
VERFAHREN ZUR HERSTELLUNG VON KRAFTSTOFF
PROCÉDÉ POUR PRODUIRE DU CARBURANT POUR MOTEUR

(30) Priority: 18.06.2008 FI 20085610
(43) Date of publication of application: 23.03.2011
(73) Proprietor: Forchem Oyj, 26101 Rauma (FI)
(72) Inventor: SAVIAINEN, Juhani, FI-26660 Rauma (FI)
(74) Representative: Seppo Laine Oy
(86) International application number: PCT/FI2009/050538
(87) International publication number: WO 2009/153408

(56) References cited:
- WO-A-2004/080942
- WO-A-2008/006190
- GB-A- 2 161 809

## Description

The present invention relates to a method of producing automotive fuel, according to the preamble of Claim 1.

According to such a method, fatty acids of crude tall oil are esterified and the fatty acid esters are recovered.

Fatty acids are obtained from vegetable oil by hydrolyzing the oils of plants in alkaline conditions. It is known that vegetable oils can be used as additives for fuel, in particular it is possible to use them mixed in fuel, as a lubricant for fuel pumps, either as such or having been esterified with alcohols.

Fatty acid esters, in turn, are particularly suitable as fuels for diesel engines. By esterifying the fatty acids, it is possible to improve their properties, in particular the cloud point can be lowered, and being an ester, the fatty acid does not corrode metals in the way free acid may do. The fatty acid esters have other preferable properties, too: their cetane number is higher than the cetane number of diesel fuel which is made from mineral oil, they do not comprise polyaromates and the sulphur compounds which they contain are easy to remove.

In almost every situation where fatty acids are separated, other by-products are generated, too, such as resin acids and sterols and various alcohols. Thermal treatment, for instance distillation and evaporation, is typically an essential part of the separation of fatty acids. In these treatments, esterification takes place between the alcohol groups and the acid groups, large molecules are formed that generate "pitch", which cannot be distilled even in vacuum and which generally has little value beyond being a heating fuel.

Fuels which comprise or which are composed of fatty acid esters are examples of "biodiesel fuels", which are produced from natural oil products by interesterification (i.e. transesterification) or from free fatty acids by esterification. The most common reagent used in esterification is methanol and the esterification is catalyzed by applying acids, most commonly para-toluene sulphonic acid, acidic ionic exchange resin or sulphuric acid.

US Patent Specification No. 2,640,823 describes how fatty acids are "selectively" esterified by means of lower alcohols and, as a result, it is possible to separate the components from each other by extraction, and by using an adequately polar solvent, such as furfural, which removes the unesterified resin acids from the esterified fatty acids. WO Patent Application No. 2007/050030 describes how biodiesel fuel is produced from crude tall oil (CTO), by first heat-treating the CTO in order to remove the sulphur compounds and then mixing into the CTO C₁-C₈ alcohols, particularly methanol or ethanol, in which case the mixture is left to become at least partly esterified in a mixing tank reactor and, after that, in a distillation column, where the water and alcohol that are generated are separated. Following these treatments, the alcohol and the water are distilled apart from each other and finally, the esterified fatty acid is removed by fractionation from the resin acids, in the third distillation column.

However, the following disadvantages are associated with the method:
a) in the earlier form of heat treatment, where evaporable sulphur compounds are separated, the esterification of fatty acids and sterol alcohols is already underway, which increases the formation of pitch,
b) more of the above-described esters are generated in the column, in which alcohol and water are separated,
c) when resin acids and fatty acid esters are separated by distillation, again, more pitch is generated, and
d) a large amount of material that has nothing to do with the actual product passes through the plant, which overstretches the plant capacity and wastes heat during the distillations.

Particularly when biodiesel fuel is produced from tall oil, it is important for the industrial management of the plant that all of the components are recovered as purities that are commercially usable and that the amount of the less valuable pitch is kept to a minimum.

WO Patent Application No. 2004/074233 and WO Patent Application No. 2004/080942 partly describe the same issue, but it is taken further. In this case, too, CTO or a corresponding vegetable oil is first treated with an alcohol having a low molecular weight, preferably with methanol, in order to have the fatty acids in an esterified state and to separate these esters by distillation. Into the bottoms product, in turn, boric acid (H₃BO₃) is added, with which the sterols are esterified as triborates. In this case, their molecular weight is so large that they remain almost totally in the bottoms product when the resin acids are removed by distillation. In the present method, the esters of boric acid evaporate in such small volumes that it is possible to carry out the distillations in a short path evaporator, even without a distillation column.

International Patent Application PCT/FI95/00134 discusses a new fuel composition which is produced by esterifying the fatty acids and the resin acids contained in a biological processed product and by mixing the resulting mixture of esters into hydrocarbons.

In our previous patent application FI 20070381, titled "Method of processing tall oil", a solution is presented in which CTO is treated with formic acid or acetic acid in such a way as to provide a significant part of the sterols with a protective esterification, in which case they cannot be esterified by the fatty acids. Finally, the separations are carried out by distillation, as they usually are, but the yields of both the fatty acids and the sterols are improved.

The purpose of the present invention is to generate a new solution for manufacturing biodiesel fuel and, at the same time, to maximize the yield of fatty acids.

The present invention is based on the principle that CTO is treated in an early stage with formic acid, which prevents the fatty acids from being esterified with the alcohols and the sterols in the tall oil during the different stages of the process, during storage, during drying and during the separation of pitch. After the separation of pitch and resin, the resulting maximised amount of free fatty acid prepared in this way is esterified with methanol in the primary oil column of the distillery, and/or in the preceding intermediate reservoir and in the primary oil column, and the methyl esters of the fatty acids that are generated are recovered from the fatty acid column of a conventional tall oil distillery, for instance as a tapping.

It is possible to implement the present solution in a distillery which comprises, arranged in series,
- a unit for drying CTO;
- a unit for removing pitch from the CTO which is generated in the drying unit;
- a unit for distilling resin, designed for the distillation of the overhead product generated in the pitch removal unit, in order to separate resin compounds and to recover the crude fatty acid fraction; and
- a predistillation unit for distilling the fraction of crude fatty acid which is generated in the resin distillation unit, and a main unit for distilling the fatty acids whereby a source of alcohol and, connected to this source, an esterification zone for at least the partial esterification of the fatty acids in the fatty acid fraction, have been arranged in the predistillation unit.

More specifically, the method according to the present invention is mainly characterized by what is stated in the characterization part of Claim 1.

Considerable advantages can be achieved with the present invention. Thus, in the method, the yield of fatty acids is maximized during the process of distillation of tall oil and, at the same time, fatty acid esters, in particular methyl esters, which are to be used as fuel, are produced from the fatty acids.

Protective esterification of sterols and other alcohols, which is carried out by using a univalent acid which has a low molecular weight, also indicates that the hydrolysis of ester is fast and simple to carry out.

In the present invention, two esterifications are carried out, similar to that described in the publication WO2004/074233 A, but with different acids and in a different order and for flows which are already partly separated by distillation. The sterols are the most valuable part of the tall oil and, in our invention, the esterification of them must be carried out first, to ensure that they are protected at an early stage from esterification with fatty acids having a high molecular weight. At the same time, naturally the other alcohols of the wood are esterified, too. After that, the fatty acids are treated during the process with methanol or ethanol, their being in a concentrated form.

Generally, the fatty acids which end up in the primary oil and the bottoms products will be, according to the present method, mainly esterified and thus, the quantity of the fuel-esters (FAME) will be maximized.

It is possible to apply the present invention in a conventional tall oil distillery without having to make any significant changes to the distillery. In practice, a conventional tall oil distillery can be used for the production of concentrated raw material for biodiesel fuel and sterols, merely by adding a separation column for alcohol and water into a conventional tall oil distillery.

In the following, the present invention will be examined more closely with the aid of a detailed description and the accompanying drawings, wherein
Figure 1 shows a conventional tall oil refining process;
Figure 2 shows a process diagram of an embodiment of the present invention, which diagram can be combined with figure 1, which is an illustration of the refining process;
Figures 3a and 3b show an initial stage of esterification using formic acid at a high temperature, as a function of time; and
Figure 4 shows the reduction of the acid number of the tall oil at five plants, during a period of two weeks.

As described above, in the solution according to the present invention, CTO is treated at an early stage with formic acid, which esterifies the alcohol groups of the CTO compounds, particularly the alcohol groups which are contained in the sterols. Most suitably, the alcohol groups in CTO are esterified immediately after the CTO has arrived at the refinery; alternatively, if agreed, they are mixed at the pulp mill immediately after the splitting and before the drying of the tall oil. The purpose is to give as small a percentage as possible (most preferably at maximum approximately 20 molar %, most suitably at maximum 10 molar %, especially at maximum approximately 5 molar % and preferably at maximum approximately 2 molar %) of the compounds which comprise alcoholic groups time to react with the acids, which are contained in the tall oil composition, before the protective esterification is carried out.

Most suitably, at least 90 weight-%, especially at least 95 weight-%, of the compounds which comprise alcoholic hydroxyl groups of CTO, are esterified with formic acid.

In the esterification stage which is presented, the quantity of the free fatty acids, which are brought to the esterification stage of the fatty acids, are maximized. Thus, in the (protective) esterification of the fatty acids, at least 80 molar %, most suitably at least 90 molar %, of the fatty acids that are contained in the CTO, which is fed into the refinery, are brought to react with a lower alcohol.

It is possible to carry out the esterification using formic acid at a temperature which is 40-145 °C, by using a reaction time of 0.1-30 days, and a molar ratio of 1:1-4:1 between the formic acid and the alcohol groups. Preferably, in the esterification, the formic acid is allowed to react at a temperature of 40-80 °C, preferably for a period of 1-30 days. CTO normally comprises a little sulphuric acid (in the water contained in the CTO), which acid catalyzes the reaction. The formic acid itself is a catalyst for the esterification.

As an example, it should be mentioned that the amount of the acid to be esterified is, in the case of formic acid, typically 1-5 % (calculated as 100 % formic acid) of the amount, i.e. mass of the tall oil.

However, it should be noted that it is not possible to carry out the splitting during the production of the crude tall oil by using only fresh formic acid, because formic acid is totally water-soluble and the amounts of the acid used would be uneconomical and, consequently, it is more appropriate to carry out the protective esterification as a separate treatment step, apart from the splitting. Certainly, that share of the formic acid which is formed in excess when the formic acid esters have been broken up during the hydrolysis stage can be used, if desired, for splitting of CTO at the pulp mill.

In the primary oil column of the refinery, the water generated and the excess alcohol from the esterification are removed by distillation. The alcohol and the water are distilled apart and the excess alcohol is reused in the esterification. If desired, the excess formic acid can be used either to assist in the splitting of the tall oil or it can be esterified with the methanol, in which case the formic acid forms methyl formate. According to one embodiment, the reagents in the compounds which contain alcoholic hydroxyl groups, and, correspondingly, the reagents required for the esterification of the fatty acids, i.e. formic acid and methanol, are brought into the process as methyl formate. The methyl formate is hydrolyzed, after which then methanol and the formic acid are distilled apart in water, and both of them are separately used for esterification (formic acid for the esterification of alcoholic compounds and methanol in particular for the esterification of fatty acids).

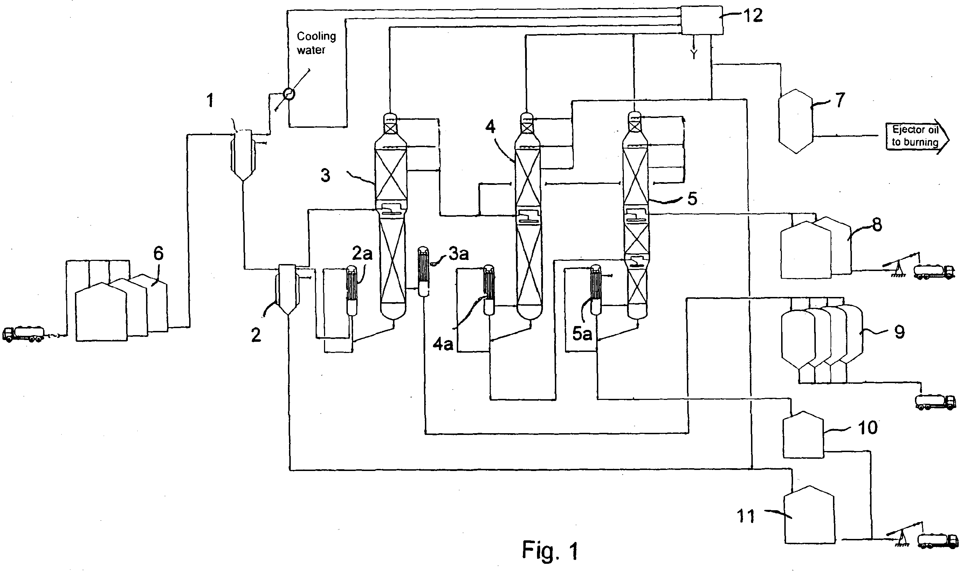

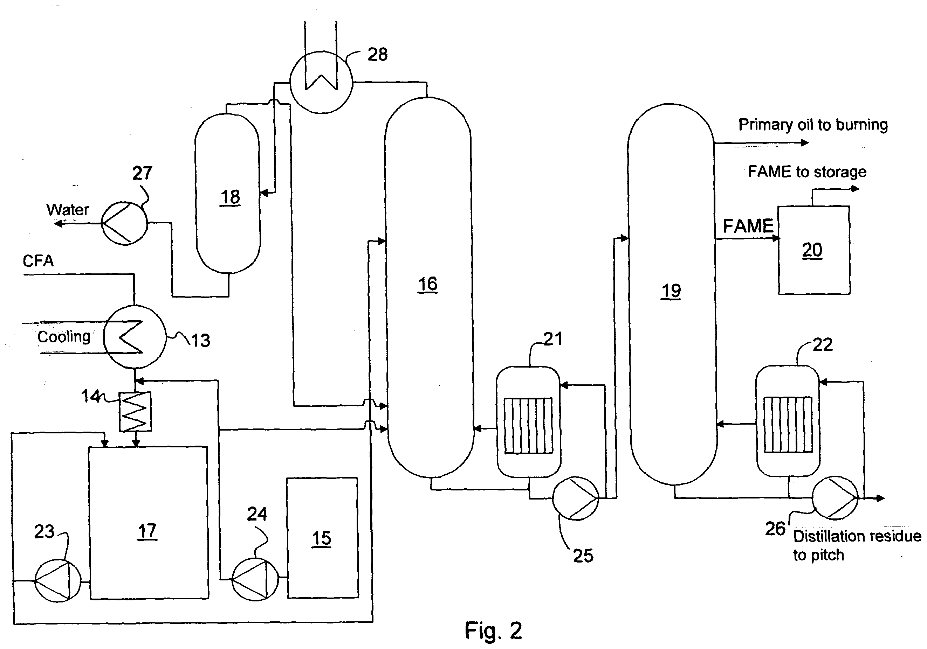

Figure 1 shows a conventional process of refining tall oil, which process is supplemented by equipment according to the present description, as shown in figure 2.

As shown in Figure 1, the treatment of CTO generally comprises the following main steps:
- drying of CTO (reference number 1 indicates the drying unit);
- removal of pitch from the reject of the drying (2);
- distillation of resin (3);
- distillation of primary oil (4); and
- distillation of fatty acid (5).

The reference numbers 2a, 3a, 4a and 5a refer to heat exchangers, of which 2a, 4a and 5a are conventional bottom boilers, whereas 3a cools the side draw-off of the resin distillation column.

The process feed comes from a CTO storage tank (6).

Different product flows are recovered from the process, in which case the reference numbers are as follows: the ejector oil 7, the storage tank for fatty acid 8, the storage tank for resin 9, the storage tank for bottoms oil 10, and the storage tank for pitch 11.

CTO is dried during the first stage of the tall oil refinery, for instance in a thin film evaporator (1).

The removal of pitch from dried CTO is carried out in the second thin film evaporator (2), the overhead product of which is fed into the distillation of resin stage, whereas the bottoms product. i.e. pitch, is separately recovered (10). Possibly, a small amount of the residue from the distillation of the primary oil is mixed into the pitch.

The top distillate from the resin distillation column (3) typically goes into the primary oil distillation stage (4), the distillate of which goes via the vacuum unit (12) to form "ejector oil" (7) and then to burning. The bottoms product is fed into the fatty acid column (5), from which the distillate is returned to the input of the primary oil column (4), and the bottoms product is generally mixed into the pitch fraction. The fatty acids are recovered approximately in the middle of the fatty acid column (5).

After the separation of pitch and resin, the crude fatty acids (CFA) are esterified preferably in the primary oil column of the distillery. The esterification of fatty acids is described in the flow sheet in figure 2.

In Figure 2, the bottom boilers are marked with reference numbers 21 and 22, and the pumps with numbers 23, 24, 25, 26 and 27.

As shown in Figure 2, the CFA composition is first cooled in the heat exchanger (13), after which methanol is fed into it, for instance with the help of a static mixer (14). The methanol is taken from from the storage tank (15). The fatty acid/methanol mixture can be fed directly into the reactive distiller (16), but it is also possible to pump the mixture into the break tank (17), as shown in the figure.

The primary oil column (16) is used as an esterification column for the crude fatty acids (CFAs), the distillate of which, i.e. methanol and water, are fractionated after the vaporization (28) in the additional methanol column (18). The bottoms product of the primary oil column (16) is fatty acid methyl-ester (FAME). This is fractionated in the fatty acid column (19) into three parts, namely
a) an overhead product, which comprises the primary oil which is taken from the top and which goes to burning,
b) the FAME, which is taken from the middle, is recovered and brought for instance to desulphuration and lye washing (20), and
c) the bottoms product, from which the distillation residue is extracted and mixed into the pitch fraction.

The FAME is washed with an alkali, in which case it is possible to remove the acidic sulphur compounds from it. For the same reason, the primary oil can be treated with an alkali extraction, too.

As Figure 2 shows, the present method needs only a separation column (17) for methanol/water and a methanol tank (15) and, if desired, an extraction column or columns for the sulphur compounds.

During the first stage of the tall oil distillation process, i.e. the drying of the CTO, it is possible to return the excess of the formic acid into the esterification reactor or the esterification storage tank, particularly in cases where the low pressure of the process is generated by using mechanical methods, without steam ejectors.

1...3 molar amounts of the formic acid are used, proportionated to the sterols and the other alcohols contained in the CTO.

The esterified sterols remain in the pitch fraction as the bottoms product from the second thin film evaporator (2), and small quantities of them are recovered in the bottoms oil of the fatty acid column, which oil is generally mixed into the pitch fraction.

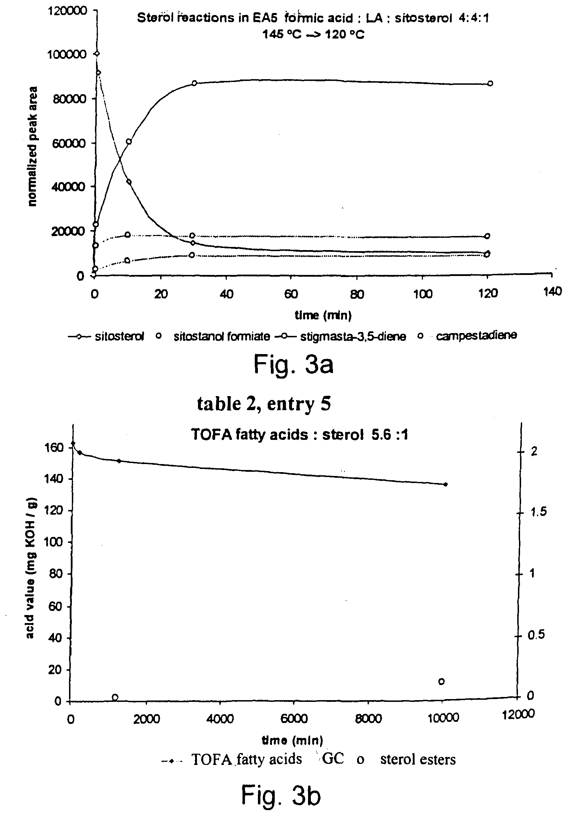

Figures 3a and 3b show the esterification with formic acid at a high temperature, which esterification takes place in the initial stage, and which reveals that the linolenic acid (LA) is not esterified at all, but, at the same time, Figure 3 shows clearly that diene compounds which are not generated at all at lower temperatures are generated at higher temperatures; the upper limit of the temperature is considered to be < 120 °C.

It is advantageous to mix the formic acid at the pulp mill, immediately after the splitting of the tall oil, when the excess water has been separated from the CTO, or immediately after the tall oil has been received at the refinery.

The addition of the formic acid into the tall oil at the distillery is preferably carried out while briskly mixing. The temperature is approximately 20-90 °C, preferably approximately 40-80 °C.

In a series of tests, acetic acid was also used as an acid, with which it was possible to protectively esterify the alcoholic compounds, as well. However, for reasons of kinesis, the esterification reaction with the acetic acid is approximately 100 times slower than the reaction with the formic acid.

The resistance to corrosion of construction materials of the equipment in a tall oil distillery is such that the materials are suitable for the purpose described above. The methanol is removed from the process in the form of fatty acid methanol-ester, and the formic acid is discharged when the sterol esters are broken up for the further processing and purification of the sterols. It is difficult to concentrate formic acid from water because its boiling point is near the boiling point of water, but it is possible to use it for the splitting of tall oil at the pulp mill, where the accompanying impurities are harmless.

The esters can be broken up by using water hydrolysis in slightly acidic conditions, or alkaline hydrolysis, in which the formic acid is discharged for instance by using sulphuric acid.

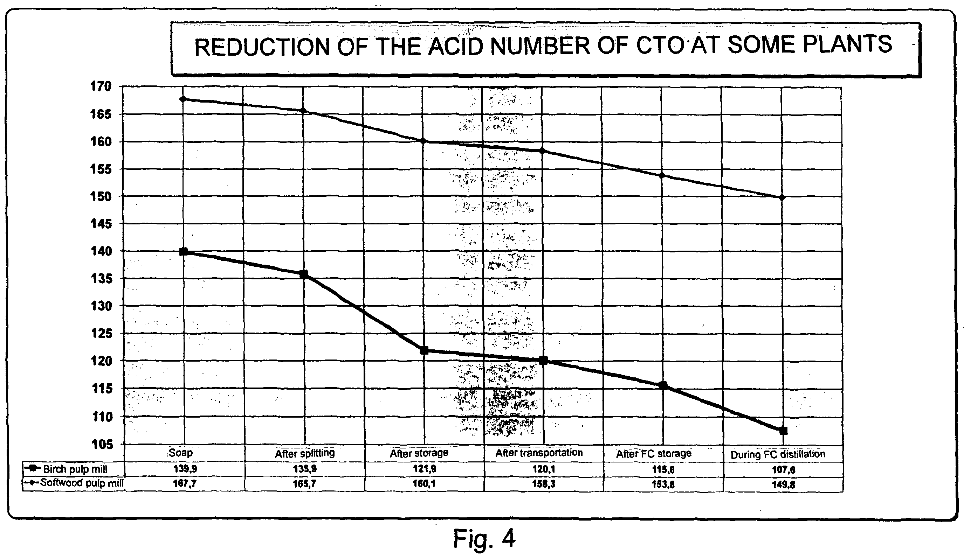

As seen clearly in Figure 4, it is most important that the first esterification (i.e. the protective esterification) is carried out very quickly, because the acid number decreases from 167 to 150 as the esterification of the fatty acids and the sterols continues following the splitting of the soap, before the CTO has had enough time to enter the separation process which is carried out together with the distillation.

The same figure also shows how birch oil acts in a situation where self-esterification is faster than when tall oil is used. The reason is that the resin acids are absent.

According to our invention, it is possible to use CTO or a mixture of tall oil and birch oil, or pure birch oil, all of which are called "CTO" for terminological reasons. In the present method, the CFA mixture, in turn, is the object of the esterification, in which case the quantities of the material treated in the esterification are smaller than if resin acids were present. At the same time, heat is saved. The excess diluted formic acid, which is generated in the process, can be esterified with the excess methanol, and the ester achieved in this way (pb 53-54 °C) can be distilled to the point where it is free from water. Furthermore, it can be mixed into methyl formate, which is brought in as a feed. It is possible to hydrolyse the methyl formate with a small amount of water, after which the alcohol is removed by distillation and both fractions are separately used for the esterifications.

### Example

According to our invention, CTO is treated at an early stage with formic acid, in order to prevent internal esterification of the CTO. In this case, in the esterification stage which is carried out later with methanol, the amounts generated are:

| | |
|---|---|
| Fatty acid methyl-esters (calculated as a percentage of the CTO) | 53.7 % |
| compared with the fact that without protective esterification, i.e. in a conventional way, methyl esterification generates | 46.5 % |
| and, when the starting point is distilled fatty acid and the process conventional, the amount of fatty acid methyl-esters of the CTO is | 39.6 % |

This example is valid particularly for Scandinavian tall oil distilleries and their raw materials, in which the CFA composition is

| | |
|---|---|
| Acid number | 188.0 mg/KOH/g |
| Resin acids | 4.5 % |
| Unsaponified | 5.0 % |

The general composition of CFA is defined as follows:

| | |
|---|---|
| Resin acids | 1-20 % |
| Unsaponified | 2-10 % |

## Claims

1. A method of producing biodiesel fuel of fatty acid esters from crude tall oil in a tall oil refinery, according to which method
- fatty acids which are contained in the crude tall oil are esterified with a lower alcohol, and
- the fatty acid esters are recovered,
**characterized in that**
- before the esterification of the fatty acids, the crude tall oil is treated with formic acid in order to esterify the sterols and corresponding compounds that comprise alcoholic hydroxyl groups, which are contained in the tall oil, so as to prevent esterification of the fatty acids with said sterols and corresponding compounds.

2. The method according to Claim 1, **characterized in that** at least 90 weight-%, most suitably at least 95 weight-%, of said sterols and corresponding compounds, which comprise alcoholic hydroxyl groups, are esterified by using formic acid.

3. The method according to Claim 1 or 2, **characterized in that** in the esterification of the fatty acids, the amount of the free fatty acids which are brought to the esterification of the fatty acid stage is maximized, wherein at least 80 molar %, most suitably at least 90 molar % of the fatty acids that are contained in the crude tall oil, which is fed into the crude tall oil refinery, are brought to react with a lower alcohol.

4. The method according to any of Claims 1 - 3, **characterized in that** the esterification performed with formic acid is carried out at a temperature which is 40-145 °C, by using a reaction time of 0.1-30 days, and a molar ratio of 1:1-4:1 between the formic acid and the alcohol groups.

5. The method according to any of Claims 1 - 4, **characterized in that** the esterification performed with formic acid is carried out at a temperature of 40-80 °C and by using a reaction time of 1-30 days, whereby the molar ratio is 1:1--2:1 between the formic acid and the alcohol groups.

6. The method according to any of Claims 1 - 5, **characterized in that** the treatment of crude tall oil with formic acid prevents the esterification of the fatty acids with the alcohols and the sterols that are contained in the tall oil during storage, during drying and during the separation of pitch.

7. The method according to any of the preceding claims, **characterized in that** the reagents required for the esterification of the compounds which contain alcoholic hydroxyl groups, and, correspondingly, the reagents required for the esterification of the fatty acids, i.e. formic acid and methanol, are brought into the process as methyl formate.

8. The method according to Claim 7, **characterized in that** the methyl formate is hydrolyzed, after which the methanol and the formic acid are distilled apart in water, and both of them are separately used for esterification.

## Patentansprüche

1. Verfahren zur Herstellung von Fettsäureester-Biodieseltreibstoff aus Rohtallöl in einer Tallölraffinerie, wonach
- Fettsäuren, die in dem Rohtallöl enthalten sind, mit einem niederen Alkohol verestert werden und
- die Fettsäureester rückgewonnen werden,
**dadurch gekennzeichnet, dass**
- das Rohtallöl vor der Veresterung der Fettsäuren mit Ameisensäure behandelt wird, um die Sterole und entsprechende, alkoholische Hydroxylgruppen umfassende Verbindungen, die in dem Tallöl vorhanden sind, zu verestern, um eine Veresterung der Fettsäuren mit den Sterolen und entsprechenden Verbindungen zu verhindern.

2. Verfahren nach Anspruch 1, **dadurch gekennzeichnet, dass** mindestens 90 Gew.-%, am besten geeignet mindestens 95 Gew.-%, der Sterole und entsprechenden, alkoholische Hydroxylgruppen umfassenden Verbindungen unter Verwendung von Ameisensäure verestert werden.

3. Verfahren nach Anspruch 1 oder 2, **dadurch gekennzeichnet, dass** bei der Veresterung der Fettsäuren die Menge der freien Fettsäuren, die in die Stufe der Veresterung der Fettsäuren eingebracht wird, maximiert wird, wobei mindestens 80 Mol-%, am besten geeignet mindestens 90 Mol-%, der Fettsäuren, die in dem Rohtallöl enthalten sind, welches der Rohtallölraffinerie zugeführt wird, mit einem niederen Alkohol umgesetzt werden.

4. Verfahren nach einem der Ansprüche 1 bis 3, **dadurch gekennzeichnet, dass** die mit Ameisensäure durchgeführte Veresterung bei einer Temperatur von 40 bis 145 °C unter Verwendung einer Reaktionszeit von 0,1 bis 30 Tagen und mit einem Molverhältnis von 1:1 bis 4:1 zwischen der Ameisensäure und den Alkoholgruppen ausgeführt wird.

5. Verfahren nach einem der Ansprüche 1 bis 4, **dadurch gekennzeichnet, dass** die mit Ameisensäure durchgeführte Veresterung bei einer Temperatur von 40 bis 80 °C und unter Verwendung einer Reaktionszeit von 1 bis 30 Tagen durchgeführt wird, wobei das Molverhältnis zwischen der Ameisensäure und den Alkoholgruppen 1:1 bis 2:1 beträgt.

6. Verfahren nach einem der Ansprüche 1 bis 5, **dadurch gekennzeichnet, dass** die Behandlung des Rohtallöls mit Ameisensäure die Veresterung der Fettsäuren mit den Alkoholen und den Sterolen, die in dem Tallöl enthalten sind, während der Lagerung, während des Trocknens und während der Trennung des Pechs verhindert.

7. Verfahren nach einem der vorhergehenden Ansprüche, **dadurch gekennzeichnet, dass** die Reagenzien, die zur Veresterung der Verbindungen, die alkoholische Hydroxylgruppen enthalten, benötigt werden, und entsprechend die Reagenzien, die zur Veresterung der Fettsäuren benötigt werden, d. h. Ameisensäure und Methanol, als Methylformiat in das Verfahren eingebracht werden.

8. Verfahren nach Anspruch 7, **dadurch gekennzeichnet, dass** das Methylformiat hydrolysiert wird, woraufhin das Methanol und die Ameisensäure in Wasser abdestilliert werden und beide getrennt für die Veresterung verwendet werden.

## Revendications

1. Procédé de production de carburant biodiesel d'esters d'acides gras à partir de tallol brut dans une raffinerie de tallol, selon lequel procédé
- les acides gras qui sont contenus dans le tallol brut sont estérifiés avec un alcool inférieur, et
- les esters d'acides gras sont récupérés,
**caractérisé en ce que**
- avant l'estérification des acides gras, le tallol brut est traité avec de l'acide formique dans le but d'estérifier les stérols et les composés correspondants qui comprennent des groupes hydroxyle alcooliques, qui sont contenus dans le tallol, de façon à prévenir l'estérification des acides gras avec lesdits stérols et les composés correspondants.

2. Procédé selon la revendication 1, **caractérisé en ce qu'**au moins 90% en poids, plus avantageusement au moins 95% en poids, desdits stérols et des composés correspondants, qui comprennent des groupes hydroxyle alcooliques, sont estérifiés en utilisant de l'acide formique.

3. Procédé selon la revendication 1 ou 2, **caractérisé en ce que** lors de l'estérification des acides gras, la quantité d'acides gras libres qui sont amenés à l'étape d'estérification des acides gras est maximisée, dans lequel au moins 80% en moles, plus avantageusement au moins 90% en moles des acides gras qui sont contenus dans le tallol brut, qui est introduit dans la raffinerie de tallol brut, sont amenés à réagir avec un alcool inférieur.

4. Procédé selon l'une quelconque des revendications 1 à 3, **caractérisé en ce que** l'estérification effectuée avec de l'acide formique est effectuée à une température qui est de 40-145°C, en utilisant un temps de réaction de 0,1-30 jours, et un rapport molaire de 1:1-4:1 entre l'acide formique et les groupes alcool.

5. Procédé selon l'une quelconque des revendications 1 à 4, **caractérisé en ce que** l'estérification effectuée avec de l'acide formique est effectuée à une température de 40-80°C et en utilisant un temps de réaction de 1-30 jours, dans lequel le rapport molaire est de 1:1-2:1 entre l'acide formique et les groupes alcool.

6. Procédé selon l'une quelconque des revendications 1 à 5, **caractérisé en ce que** le traitement du tallol brut avec de l'acide formique empêche l'estérification des acides gras avec les alcools et les stérols qui sont contenus dans le tallol, pendant le stockage, pendant le séchage et pendant la séparation du brai.

7. Procédé selon l'une quelconque des revendications précédentes, **caractérisé en ce que** les réactifs requis pour l'estérification des composés qui contiennent des groupes hydroxyle alcooliques, et, en conséquence, les réactifs requis pour l'estérification des acides gras, c-à-d l'acide formique et le méthanol, sont introduits dans le procédé sous forme de formiate de méthyle.

8. Procédé selon la revendication 7, **caractérisé en ce que** le formiate de méthyle est hydrolysé, après quoi le méthanol et l'acide formique sont distillés à part dans l'eau, et les deux sont utilisés séparément pour l'estérification.
